# EUROPÄISCHE PATENTANMELDUNG

(11) **EP 0 730 986 A1**
(43) Veröffentlichungstag der Anmeldung: **11.09.1996**
(21) Anmeldenummer: 96103248.9
(22) Anmeldetag: 02.03.1996
(51) Int. Cl.: B60B 33/02

(54) **Arretierbare Lenkrolle**

(30) Priorität: 06.03.1995 AU PN1554/95; 20.11.1995 AU PN6649/95
(71) Anmelder: Quinn, Michael, East Malvern, VIC 3145 (AU)
(72) Erfinder: Quinn, Michael, East Malvern, VIC 3145 (AU)
(74) Vertreter: Vomberg, Friedhelm, Dipl.-Phys.

(57) **Zusammenfassung**

Die Erfindung betrifft eine arretierbare Lenkrolle (10) für Einkaufswagen, Kofferkulis oder ähnliche mit einer Tragfläche versehene Fahrgestelle, mit einem Laufrad (11), das in einer Gabel (13) gehaltert ist, deren Basis um eine vertikale Achse (15) drehbar in einem Rahmen (16) befestigt ist, und mit einer Rasteinrichtung zur lösbaren Arretierung der Gabelstellung, bei der die Gabel (13) einen ringförmigen Außenmantel besitzt, der an einer Seite eine ebene Fläche (35) aufweist und im übrigen bogenförmig (34) ausgebildet ist und der bei Drehung um die vertikale Achse (15) gegen eine federbelastete ebene Gegenfläche (33) anliegt.

## Beschreibung

Die Erfindung betrifft eine arretierbare Lenkrolle für Einkaufswagen, Kofferkulis oder ähnliche mit einer Tragfläche versehene Fahrgestelle, mit einem Laufrad, das in einer Gabel gehaltert ist, deren Basis um eine vertikale Achse drehbar in einem Rahmen befestigt ist, und mit einer Rasteinrichtung zur lösbaren Arretierung der Gabelstellung.

Eine solche Lenkrolle ist aus der DE 73 31 755.2 U1 bekannt. Diese Lenkrolle besteht aus einer Platte, die beispielsweise an der Unterseite einer Palette durch vier Öffnungen der Platte durchdringende Schrauben der dergleichen festgelegt wird. An der Platte ist über einen Kugel-Drehkranz ein als Gabel ausgebildeter Träger gelagert, der seinerseits als Halterung für die Laufrolle dient. Um die Lenkrolle und damit die Laufrad-Stellung arretieren zu können, ist in der Ebene des Drehkranzes an der Platte und dem Träger je ein Teil einer federbelasteten Kugelraste vorgesehen, die einerseits aus einer federbelastet geführten Kugel, die im Regelfall in einem besonderen Gehäuse angeordnet ist, und aus einer Ausnehmung, Bohrung, Rille oder dergleichen besteht, die miteinander in Wirkverbindung bringbar sind. Hierzu ist ein die federbelastete Kugel aufnehmendes Gehäuse erforderlich, das an der Platte befestigt ist. Ist die Lenkrolle, die an einem Transportmittel befestigt ist, in ihrer arretierten Lage, bei der die Kugel in die vorgesehene Rille, Mulde oder ähnliches eingreift, festgesetzt, kann bei Bewegung des Laufrades in einer anderen als der arretierten Richtung gegen den Druck der Feder die Kugelarretierung gelöste werden. Der Nachteil einer solchen Arretierung liegt in der aufwendigen Lagerung der Kugel und der diese belastenden Feder. Staub, Schmutz oder sonstige Festkörper können leicht dazu führen, daß die Rastmulde- oder rille zugesetzt wird oder die Kugel blockiert wird, wodurch die Funktionsfähigkeit der Arretiervorrichtung augehoben wird. Eine Reinigung des die Kugel und die Feder aufnehmenden Gehäuses oder ein Federaustausch sind zudem aufwendig.

Ähnliche Rasteinrichtungen, die mit federbelasteten Kugeln und Rastmulden arbeiten, sind aus der FR-B-2 703 300, FR-A-2 488 190 oder der BE-B-710 837 bekannt, für die Entsprechendes gilt.

Es ist Aufgabe der vorliegenden Erfindung, die eingangs erwähnte Lenkrolle konstruktiv zu vereinfachen, eine sichere Funktionsfähigkeit des Arretier-Mechanismusses zu gewährleisten und die Handhabung der Lenkrollenarretierung zu vereinfachen. Diese Aufgabe wird durch die Lenkrolle nach Anspruch 1 gelöst, die erfindungsgemäß dadurch gekennzeichnet ist, daß die Gabel einen ringförmigen Außenmantel besitzt, der an einer Seite eine ebene Fläche aufweist und im übrigen bogenförmig ausgebildet ist und der bei Drehung um die vertikale Achse gegen eine federbelastete ebene Gegenfläche anliegt. Der Vorteil der vorliegenden Erfindung liegt insbesondere in dem konstruktiv einfachen und funktionssicheren Aufbau, bei dem eine Beeinträchtigung der Arretierfunktion durch Staub oder andere Festpartikel ausgeschlossen ist. Der ringförmige Außenmantel der Gabel liegt in einer Ebene, die parallel zur Horizontalachse liegt, um die das Laufrad gedreht werden kann. Eine Arretierung der Lenkrolle ist dadurch möglich, daß die ebene Fläche des ringförmigen Außenmantels an der federbelasteten Gegenfläche anliegt. Soll die Arretierung aufgehoben werden, kann die Gabel um ihre Drehachse verschwenkt werden, wobei die ebene Gegenfläche gegen den Federdruck bewegt wird und der Gabel-Außenmantel nach Verschwenken mit seinem ringförmigen Teil an der Gegenfläche anliegt. Der ringförmige Außenmantel besitzt demnach die Kontur eines (Teil-)Kreises, bei dem sekantenartig unter Schaffung einer ebenen Fläche ein Teilstück abgeschnitten ist. Der Federweg und die Federkraft sind so gewählt, daß die ebene Fläche des Außenmantels und die Gegenfläche, ggf. noch unter geringfügigem Federdruck in der Arretierstellung zur Anlage kommen. Dadurch, daß die Gegenfläche und der Außenmantel bei Drehung der Lenkrolle um eine vertikale Achse, also bei Änderung der Fahrrichtung des Einkaufswagens, gleitend aneinander vorbeigeführt werden, können sich auch keine Staub- oder sonstigen Partikel festsetzen. Im Rahmen der vorliegenden Erfindung sind auch solche Ausführungsformen eingeschlossen, die zwei oder mehr ebene Außenflächen-Mantelteile aufweisen, etwa um einem Bedürfnis nach zwei oder mehr Arretierstellungen Rechnung zu tragen. Die zwischen den ebenen Flächen liegenden Außenmantelteile sind dann ebenfalls bogenförmig ausgebildet, um zwischen zwei oder mehr Raststellungen eine gleitende Drehführung der Lenkrolle bzw. des Laufrades zu ermöglichen.

Weiterbildungen der Erfindung sind in den Unteransprüchen beschrieben.

So ist vorzugsweise die Bogenform des Gabelaußenmantels eine Kreisform, wodurch gewährleistet ist, daß in den nicht arretierten Drehstellungen der Lenkrolle ein einheitlicher Federdruck über die Gegenfläche auf den Gabel-Außenmantel ausgeübt wird. In Einzelfällen kann es jedoch wünschenswert sein, von der Kreisform abweichende elliptische oder andere Bogenformen zu wählen, die bewirken, daß die Lenkrolle bzw. das Laufrad entsprechend der jeweils unterschiedlich wirkenden, über die Gegenfläche ausgeübten Druckkraft in bevorzugte Stellungen gedrückt wird, die bestimmte Drehrichtungen präferieren.

Vorzugsweise wird die Gegenfläche als Teil eines auf einer federnd gelagerten Platte angeordneten Blockes gebildet, der insbesondere ein Quader aus einem Kunststoff oder Hartgummi sein kann. Dies schließt auch solche Quaderformen ein, deren Kanten und Ecken leicht abgerundet sind.

Nach einer weiteren Ausgestaltung der Erfindung ist die Platte über eine Zugfeder gegen den Rahmen federnd gelagert. Alternativ hierzu ist es möglich, die Platte selbst als Blattfeder auszubilden, deren erstes Ende an dem Rahmen befestigt ist und deren anderes freies Ende, ggf. mit dem Quaderblock die Gegenfläche bildet. In einer besonderen Ausführungsform kann das druckgebende Medium (Feder) als eine Blattfeder ausgebildet sein, wobei ein Betätigungselement elastisch in Richtung des Trägers wirkt und die Führung der Feder darstellt. Eine solche Blattfeder kann insbesondere integral mit einer Montage-Klammer oder ähnlichem ausgebildet sein, z.B. aus einem Kunststoff bestehen, oder die Feder kann separat zu der Halteklammer angeordnet sein.

Zusätzlich kann vorgesehen sein, daß die Platte an einer Halterung befestigt ist, die um eine horizontale Achse schwenkbar mit dem Rahmen verbunden ist. Durch diese Maßnahme läßt sich die Elastizität bzw. der durch die Platte beschreibbare Federweg optimieren.

Vorzugsweise liegt der ringförmige Außenmantel der Gabel im Bereich seines bogenförmigen Teiles im wesentlichen punktförmig an der Gegenfläche an, was durch eine im Querschnitt gekrümmte Außenfläche dieses bogenförmigen Teiles, etwa durch Ausbildung einer Ringwulst, bewerkstelligt wird. Die im wesentlichen punktförmige Anlage minimiert die Gleitreibung im Fall der Lenkrollendrehung um die vertikale Achse.

Das erfindungsgemäße Radführungssystem kann auf schwenkbare Lenkrollen an Einkaufswagen, Palettenwagen, Kofferkulis oder sonstigen fahrbaren Gestellen angewendet werden. Beispielsweise besitzen die Einkaufswagen einen Rahmen, an dem mindestens eine Auflagefläche zur Ablage von Lasten, ggf. ein Korb, sowie ein Handgriff zum Ziehen oder Schieben dieses Wagens vorgesehen ist. Üblicherweise besitzen die Wagen vier an den Ecken befestigte Lenkrollen, die jeweils um eine vertikale Achse drehbar sind, so daß die Laufrichtung des Einkaufswagens etc. bzw. dessen Steuerbarkeit in beliebigen Schubrichtungen gewährleistet ist. Frei um eine vertikale Achse drehbare Lenkrollen neigen dazu, Flatterbewegungen auszuführen, die ein Vorwärtsrollen des Einkaufswagens erschweren. Eine freie Beweglichkeit der Lenkrollen kann auch dazu führen, daß nicht alle Lenkrollen in der gleichen Richtung ausgerichtet sind, wodurch beim Anschieben eine Blockierung gegeben ist. Ein solcher Fall kann auftreten, wenn die Ebenen zweier Laufrollen senkrecht zueinanderstehen. Im Bereich von geneigten Flächen, über die ein Einkaufswagen abgerollt werden soll, ist es häufig wünschenswert, eine bevorzugte "Geradeausstellung" der Laufräder beizubehalten, insbesondere dann, wenn schräg zur Neigung ein Einkaufswagen bewegt werden soll. Auf der anderen Seite sollen die Möglichkeiten einer freien Drehbarkeit der Lenkrollen um eine vertikale Achse uneingeschränkt verfügbar bleiben, um die Handhabung solcher Einkaufswagen oder ähnlichem zu erleichtern. Bei der vorliegenden Erfindung ist eine Lenkrollenführung mit einem Träger vorgesehen, in dem das Laufrad um eine senkrechte Achse frei beweglich angeordnet ist. Das Laufrad selbst ist in einer Gabel gehaltert und dreht sich um eine horizontale Achse. Die erfindungsgemäße Führung der Lenkrolle weist die federbelastete ebene Gegenfläche als Druckfläche auf, die die Gabel und damit die Laufrolle in einer entsprechenden vorbestimmten Lage hält, aus der die Laufrolle durch entsprechende Kraft- bzw. Druckanwendung dearretiert werden kan.

Üblicherweise ist die Lenkrollenanordnung so aufgebaut, daß die horizontale Drehachse des Laufrades außerhalb der vertikalen Schwenkachse der Lenkrolle angeordnet ist, was durch entsprechende Gabelausbildungen erreicht wird. Bevorzugt ist die Arretierstellung der Lenkrolle so gewählt, daß der Einkaufswagen bei dieser Stellung in Vorwärtsrichtung bewegbar ist. Vorzugsweise ist die ebene Gegenfläche quer zur Vorwärtsbewegungsrichtung des Einkaufswagens oder ähnlichem angeordnet. In dementsprechender Weise liegt die federbelastete ebene Gegenfläche und die ebene Fläche des ringförmigen Außenmantel der Gabel im Arretierzustand im wesentlichen parallel zu der Drehachse des Laufrades. Vorzugsweise ist die federbelastete ebene Gegenfläche in einer Halterung angeordnet, die Drehbewegungen in bezug auf den Rahmen der Lenkrolle um eine Horizontalachse ermöglicht. Die Federbelastung kann durch eine Zugfeder, insbesondere eine Schraubenfeder oder ein sonstiges elastisches Federteil verwirklicht werden. Alternativ hierzu kann die Federbelastung jedoch auch mittels einer Blattfeder realisiert werden, wobei der Wirkungsbereich der Blattfeder so angeordnet ist, daß elastisch geführte Bewegungen der Blattfeder in Richtung auf die ringförmige Außenmantelfläche der Gabel und hiervon weg gewährleistet sind.

Im Rahmen der vorliegenden Erfindung werden die Gabel sowie die federbelastete ebene Gegenfläche aus verschleißfestem Material hergestellt bzw. mit verschleißfester Beschichtung versehen. Ein verschleißfestes Material kann z.B. ein auf Teflon basierendes Material oder ein sonstiger Kunststoff sein.

Eine bevorzugte Ausführungsform der Erfindung ist in den Zeichnungen dargestellt. Es zeigen
- Fig. 1: eine Seitenansicht einer arretierbaren Lenkrolle und
- Fig. 2: dieselbe Seitenansicht wie Fig. 1 mit teilweise durchbrochener Darstellung,
- Fig. 3: eine Seitenansicht der Ausführungsform nach Fig. 2 und
- Fig. 3A, 3B: entsprechende Seitenansichten und Draufsichten einer bevorzugten Ausführungsform.

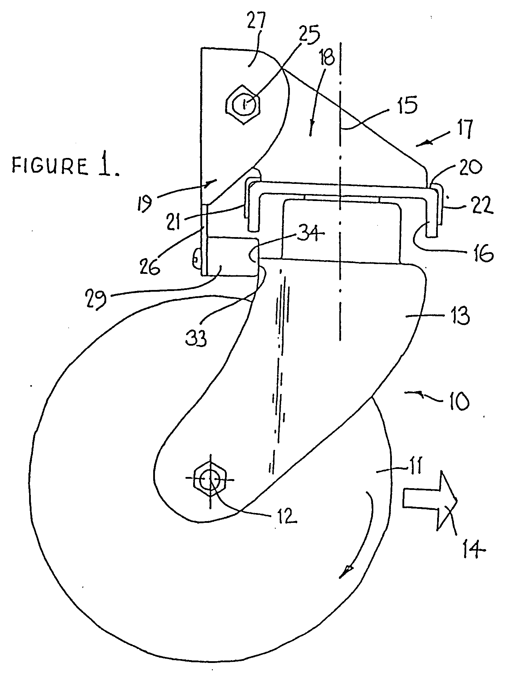

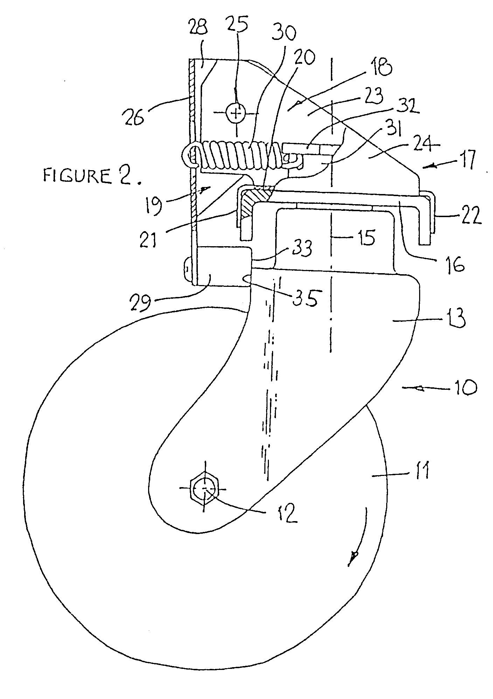

Die erfindungsgemäße Lenkrolle 10 besitzt ein Laufrad 11, das um eine Rotationsachse 12, die durch eine Gabel 13 geschaffen wird, frei drehbar ist. Pfeil 14 zeigt die mögliche Laufrichtung der Lenkrolle an. Die Gabel 13 ist um eine Vertikalachse 15 drehbar in einem Rahmen 16 gelagert, der Teil eines Einkaufswagens sein kann oder der an einem solchen Einkaufswagen befestigt ist. Als Führungsmittel 17 dienen eine erste Halterung 18, die mit dem Rahmen 16 derart verbunden ist, daß eine Drehung der Halterung 18 gegenüber der Drehachse 15 nicht möglich ist. Das Führungsmittel 17 schließt ferner eine zweite Halterung 19 ein, die als elastisches Teil schwenkbar um eine Horizontalachse angeordnet ist, die senkrecht zur durch Pfeil 14 dargestellten Vorwärtsrichtung liegt. Die erste Halterung 18 weist eine Basisplatte 20 auf, die mit der oberen Oberfläche des Rahmens 16 in Eingriff steht und zwei vordere, nach unten gerichtete Schenkel 22 und zwei rückwärtige Schenkel 21 aufweist, die front- wie rückseitig den Rahmen 16 umfassen und die die Halterung 18 drehfest gegenüber der Achse 15 festlegen. Die erste Halterung 18 besitzt ferner gegenüberliegend angeordnete und aufwärtsgerichtete Seitenwände 23 und 24, die im oberen Teil ein Drehgelenk 25 schaffen, über das die zweite Halterung 19 schwenkbar ist. Die zweite Halterung 19 besitzt eine rückseitige Wand 26 und zwei gegenüberliegende Seitenwände 27 und 28, durch welche die Gelenkachse 25 hindurchführt. Am unteren Ende der Wand 26 ist ein als Feststellblock ausgebildeter Quader 29 befestigt, der aus verschleißfestem Material, wie Teflon, oder sonstigem gleitreibungsgeringem Material besteht. Dieser druckbelastete Block 29 liegt durch die Kraft der Feder 30 druckbeaufschlagt an der Außenmantelfläche der Gabel 13 an. Die Feder 30 ist zwischen der Wand 26 und einem Befestigungspunkt 31 an der ersten Halterung befestigt. Eine Nut 32 fixiert sowohl die Lenkrolle 10 und das Führungsmittel 17 an dem Rahmen 16 und hält die Feder 30 über dem Befestigungspunkt 31 unter Zugwirkung. Der Block 29 ist quaderförmig ausgebildet und besitzt eine vordere ebene Gegenfläche 33, die am Außenmantel 34 der Gabel 13 druckbeaufschlagt anliegt. Die in Fig. 1 dargestellte Außenmantelkontur 34 ist wulstförmig ausgebildet und besitzt in einer unteren oder oberen Draufsicht eine (Teil-)Kreisform. In der in Fig. 2 dargestellten Drehposition, bei der die Laufrolle 11 um 180° verschwenkt worden ist, liegt der Block 29 an der ebenen Fläche 35 des Gabelträgers an, womit eine Arretierung gewährleistet ist. Die vorliegende Erfindung schließt auch solche Abwandlungen der beiden Flächen 33 und 35 mit ein, bei denen in entsprechender Weise zugleich zwei seitliche Bereiche des Außenmantels der Gabel 13 arretierbar sind.

Die Arbeitsweise der Lenkrolle beruht darauf, daß die federbelastete ebene Gegenfläche 33 (bzw. der Block 29) bei der in Fig. 1 dargestellten Stellung der Lenkrolle eine Rotation um die Drehachse 15 zur Steuerung des Einkaufswagens, an dem diese Lenkrolle befestigt ist, in verschiedenen Richtungen zuläßt. Hierbei wird die Gabel 13 sowie in entsprechender Weise das Rad 11 entsprechend den ausgeübten Zug- oder Druckkräften beliebig eingestellt. Hierbei wird durch die Druckbelastung über die Feder 30 eine der freien Drehbeweglichkeit entgegengerichtete Gleitreibung ausgenutzt, die ein Flattern des Laufrades 11 bzw. der Gabel verhindert. Zur Arretierung der Lenkrolle kann die Gabel 13 in die in Fig. 2 dargestellte Position verdreht werden, bei der die ebene Fläche 35 an der Gegenfläche 33 anliegt. In dieser Lage ist die Vorwärtslaufrichtung des Laufrades 11 festgelegt, aus der die Lenkrolle nur dadurch gelöst werden kann, daß entgegen der Federbelastung 30 durch Drehung der Gabel die Arretierstellung wieder aufgehoben wird, wie dies in Fig. 1 dargestellt ist.

In einer alternativen Ausführungsform kann die zweite Halterung 19 auch durch eine einfache Blattfeder ersetzt werden. Diese Blattfeder wird an der Halterung 18 an ihrem oberen Ende befestigt und liegt mit ihrem unteren Ende bzw. einem dort angebrachten Feststellblock federnd an der Fläche 34 bzw. 35 an. Hierdurch können die Feder 30 sowie die übrigen Teile der Halterung 19 eingespart werden. Der besondere Vorteil der vorliegenden Erfindung liegt darin, daß mit wenigen, verschleißfesten Teilen eine sichere lösbare Arretierung geschaffen wird, die auch in Schmutzbereichen funktionssicher arbeiten. Die Arretiervorrichtung kann preiswert verwirktlicht werden, bereits vorhandene Lenkrollen können durch entsprechenden Austausch der Gabel und Nachrüstung der federbelasteten Halterung 19 bzw. eine Blattfeder leicht nachgerüstet werden.

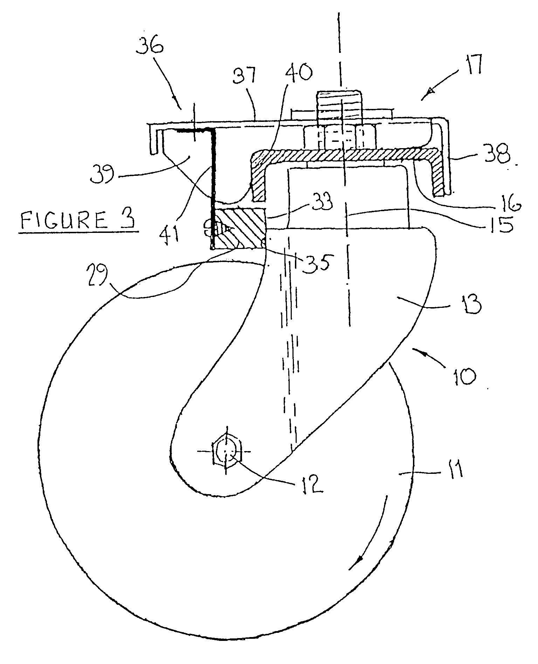

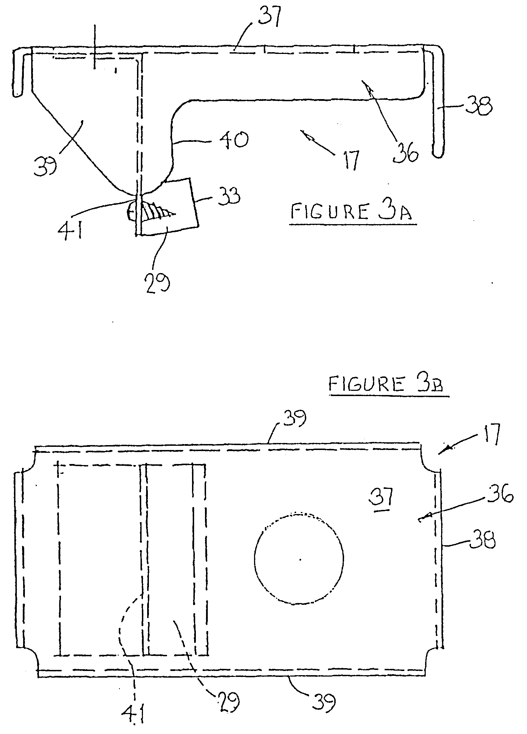

In einer alternativen bevorzugten Ausführungsform kann das Druckmittel als ein Einzelteil, insbesondere nicht gelenkig befestigtes Teil, ausgebildet sein und eine Blattfeder aufweisen, die entsprechend herabragend wie die Wand 26 angeordnet ist und die in der Lage ist, Federkräfte in Richtung auf die Gabel 13 auszuüben bzw. gegen den Federdruck zurückbewegt zu werden. Der Vorteil dieser Ausführung liegt in einer minimalen Anzahl von benötigten Teilen und der hiermit möglichen Reduzierung der Herstellungskosten. Eine solche Ausführungsform ist in den Fig. 3, 3A und 3B dargestellt. In dieser Ausführungsform besitzt das Führungsmittel 17 einen ersten Teil 36, der zur Montage auf den Rahmen 16 angepaßt ist, auf dem die Lenkrolle befestigt ist. Dieser erste Teil 36 besitzt eine obere Wand 37, herabragende Wandstücke 38 und Seitenwände 39, die ein rückseitiges Widerlager 40 zur Lokalisierung des Rahmens 16 zwischen den genannten Wänden bilden. Eine Blatt- oder Schraubenfeder 41 ist mittels einer Schraube oder ähnlichem an der oberen Wand 37 befestigt, so daß sie hiervon herabragend angeordnet ist und in Verbindung mit dem aufgeschraubten Block 29 transverse Bewegungen in Richtung auf die Gabel ausführen kann. Wie bei der vorbeschriebenen Ausführungsform, liegt der Block 29 federnd an der Fläche 35 bzw. 34 der Gabel an. Im Rahmen der vorliegenden Erfindung ist es möglich, anstelle der dargestellten Teile 26, 29 und 41 auch elastische Kunststoffteile zu verwenden.

Zusätzlich können die einzelnen Teile der Führungsmittel 17 je nach zu montierender Lenkrolle variieren. Beispielsweise kann die Halterung 18 sowie 36 ebenso unterschiedlich konstruiert sein wie das Teil 19 oder die Schraubenfeder oder Platte 41 direkt an der Halterung, die auch die Lenkrolle aufnimmt, montiert werden. Umgekehrt ist es ebenso möglich, das Federelement selbst an der Gabel 13 zu befestigen, wobei die erfindungsgemäße Konstruktion hinsichtlich des ringförmigen Gabelaußenmantels und der einen ebenen Fläche unverändert bleibt. Die vorbeschriebene Ausführungsform ist insbesondere für Einkaufswagen geeignet, wie sie in Supermärkten oder ähnlichem benutzt werden. Bei der Neuherstellung von Einkaufswagen können die Führungsmittel 17 von vornherein in den Einkaufswagen integriert werden, ebenso ist ein Nachrüsten bereits existierender Einkaufswagen, die noch keine Blockierungseinrichtung aufweisen, möglich.

Unabhängig hiervon können an der Lenkrolle auch Feststellbremsen angeordnet sein, die im Prinzip nach dem Stand der Technik ebenfalls bekannt sind.

## Patentansprüche

1. Arretierbare Lenkrolle (10) für Einkaufswagen, Kofferkulis oder ähnliche mit einer Tragfläche versehene Fahrgestelle, mit einem Laufrad (11), das in einer Gabel (13) gehaltert ist, deren Basis um eine vertikale Achse (15) drehbar in einem Rahmen (16) befestigt ist, und mit einer Rasteinrichtung zur lösbaren Arretierung der Gabelstellung,
**dadurch gekennzeichnet**,
daß die Gabel (13) einen ringförmigen Außenmantel besitzt, der an einer Seite eine ebene Fläche (35) aufweist und im übrigen bogenförmig (34) ausgebildet ist und der bei Drehung um die vertikale Achse (15) gegen eine federbelastete ebene Gegenfläche (33) anliegt.

2. Lenkrolle nach Anspruch 1, dadurch gekennzeichnet, daß die Bogenform des Gabelaußenmantels eine Kreisform ist.

3. Lenkrolle nach Anspruch 1 oder 2, dadurch gekennzeichnet, daß die Gegenfläche (33) Teil eines auf einer federnd gelagerten Platte (26) angeordneten Blockes (29), vorzugsweise Quaders aus einem Kunststoff oder Hartgummi ist.

4. Lenkrolle nach Anspruch 3, dadurch gekennzeichnet, daß die Platte (26) über eine Zugfeder (30) gegen den Rahmen federnd gelagert ist.

5. Lenkrolle nach einem der Ansprüche 1 bis 3, dadurch gekennzeichnet, daß die Platte (26) eine Blattfeder ist.

6. Lenkrolle nach eiem der Ansprüche 3 bis 5, dadurch gekennzeichnet, daß die Platte (26) an einer Halterung (19) befestigt ist, die um eine horizontale Achse (25) schwenkbar mit dem Rahmen (18) verbunden ist.

7. Lenkrolle nach einem der Ansprüche 1 bis 6, dadurch gekennzeichnet, daß der ringförmige Außenmantel der Gabel (13) im Bereich seines bogenförmigen Teiles (34) eine im Querschnitt gekrümmte Außenfläche aufweist und hiermit im wesentlichen punktförmig an der Gegenfläche (33) anliegt.

8. Lenkrolle nach einem der Ansprüche 1 bis 7, dadurch gekennzeichnet, daß die federbelastete ebene Gegenfläche (33) in einer Ebene liegt, die zwischen der Drehachse (12) des Laufrades (11) und der vertikalen Drehachse (15) angeordnet ist.
